# EUROPÄISCHE PATENTSCHRIFT

(11) **EP 2 841 831 B1**
(45) Veröffentlichungstag und Bekanntmachung des Hinweises auf die Patenterteilung: **28.03.2018**
(21) Anmeldenummer: 13718155.8
(22) Anmeldetag: 15.04.2013
(51) Int. Cl.: F16K 1/38, F16K 1/46

(54) **ABSPERRVENTIL**
SHUT-OFF VALVE
SOUPAPE D'ARRÊT

(30) Priorität: 25.04.2012 DE 102012103641
(43) Veröffentlichungstag der Anmeldung: 04.03.2015
(73) Patentinhaber: BITZER Kühlmaschinenbau GmbH, 71065 Sindelfingen (DE)
(72) Erfinder: HERMANN, Frank, 04617 Rositz (DE); MIKESCH, Lucas, 04626 Schmölln (DE)
(74) Vertreter: Hoeger, Stellrecht & Partner Patentanwälte mbB
(86) Internationale Anmeldenummer: PCT/EP2013/057838
(87) Internationale Veröffentlichungsnummer: WO 2013/160141

(56) Entgegenhaltungen:
- EP-A2- 2 423 546
- WO-A1-2010/027627
- WO-A2-2011/056093
- GB-A- 1 113 982
- GB-A- 1 321 149
- US-A- 51 221
- US-A- 1 686 849
- US-A- 2 985 424
- US-A- 3 412 751
- US-A- 4 249 717
- US-A1- 2009 173 905
- US-B1- 6 637 726

## Beschreibung

Die Erfindung betrifft ein Absperrventil umfassend ein Ventilgehäuse, einen am Ventilgehäuse gehaltenen Ventilsitz und ein in dem Ventilgehäuse relativ zum Ventilsitz bewegbares Ventilelement, welches mittels einer Verstelleinheit bewegbar ist.
Derartige Absperrventile sind aus dem Stand der Technik bekannt. US4249717, zum Beispiel, offenbart ein Ventil gemäß dem Oberbegriff des Anspruchs 1. Bei diesen Absperrventilen besteht das Problem, dass das Absperrventil einen unerwünschten Strömungswiderstand in der Offenstellung des Ventilelements aufweist.
Der Erfindung liegt daher die Aufgabe zugrunde, ein Absperrventil zu schaffen, das aufgrund seiner Konstruktion einen möglichst geringen Strömungswiderstand in der Offenstellung des Ventilelements aufweist.
Diese Aufgabe wird bei einem Absperrventil der eingangs beschriebenen Art erfindungsgemäß dadurch gelöst, dass das Ventilelement einen Ventilteller aufweist, welcher auf seiner dem Ventilsitz zugewandten Seite mit einem Dichtelement versehen ist, das an dem Ventilteller anliegt, wobei der Ventilteller auf seiner dem Dichtelement zugewandten Seite eine geschlossen umlaufend angeordnete Erhebung aufweist, gegen welche das Dichtelement anliegt, wobei die Erhebung so ausgebildet ist, dass bei Beaufschlagung des Dichtelements in Richtung des Ventiltellers sich die Erhebung in das Dichtelement eingräbt, wobei das Dichtelement eine konisch verlaufende Außenfläche aufweist, mit welcher dieses an dem Ventilsitz anlegbar ist, wobei der Ventilsitz eine Einlasswand und eine Auslasswand aufweist, wobei eine Übergangsfläche einen Übergang von der Einlasswand zu der Auslasswand bewirkt, und wobei die Übergangsfläche, an welcher die Außenfläche anlegbar ist, gerundet ist. Der Vorteil dieser Lösung ist darin zu sehen, dass damit die Möglichkeit besteht, das Ventilelement strömungsgünstig auszubilden und somit einen geringeren Strömungswiderstand in der Offenstellung des Ventilelements zu erhalten.
Dabei könnte das Ventilelement immer noch drehbar mit der Verstelleinheit verbunden sein, wobei hierzu üblicherweise eine drehbare Verbindung vorgesehen ist.

Besonders günstig ist es, wenn das Ventilelement drehfest mit der Verstelleinheit verbunden ist.

Diese Lösung hat den großen Vorteil, dass dadurch die Drehführung zur Verbindung zwischen dem Ventilelement und der Verstelleinheit entfällt und somit ein strömungsgünstigerer Aufbau des Absperrventils möglich ist.

Besonders günstig ist es hierbei, wenn das Ventilelement einen Nabenkörper aufweist, welcher mit der Verstelleinheit verbunden ist.

Über einen derartigen Nabenkörper lässt sich eine einfache und strömungsgünstige Verbindung zwischen dem Ventilelement und der Verstelleinheit herstellen.

Insbesondere ist es dabei günstig, wenn der Nabenkörper einen den Ventilteller tragenden Zentralabschnitt des Ventilelements bildet, der sich aufgrund der Bauweise sehr strömungsgünstig ausbilden lässt.

Die Verstelleinheit könnte grundsätzlich beliebig, beispielsweise als Linearantrieb ausgebildet sein.

Insbesondere ist vorteilhafterweise vorgesehen, dass die Verstelleinheit eine Stellspindel umfasst, die drehbar und axial verstellbar in einer Aufnahme des Ventilgehäuses angeordnet ist.

Mit einer derartigen Verstellspindel ist in einfacher Weise eine Bewegung des Ventilelements realisierbar.

Eine Realisierung sieht vor, dass das Ventilelement drehfest mit der Stellspindel verbunden ist, so dass dadurch eine einfache und strömungsgünstige Realisierung der Verbindung zwischen dem Ventilelement und der Stellspindel möglich ist.

Besonders günstig ist es dabei, wenn der Nabenkörper mit der Stellspindel verbunden, insbesondere an diese angeformt ist, so dass eine direkte Verbindung zwischen der Stellspindel und dem Ventilelement in Form des Nabenkörpers realisierbar ist.

Eine weitere vorteilhafte Lösung sieht vor, dass das Ventilelement auf seiner dem Ventilteller gegenüberliegenden Seite des Dichtelements einen Halteteller trägt, der das Dichtelement in Richtung des Ventiltellers beaufschlagt.

Ein derartiger Halteteller hat ergänzend zu dem Ventilteller den Vorteil, dass sich dadurch das Ventilelement strömungsgünstig ausbilden lässt und das Dichtelement zuverlässig zwischen dem Halteteller und dem Ventilteller fixieren lässt.

Zweckmäßigerweise ist hierzu vorgesehen, dass der Halteteller durch einen Haltekörper in Richtung des Ventiltellers beaufschlagt ist, wodurch der Halteteller in einfacher Weise mit dem Ventilteller verbindbar ist.

Dabei könnte der Haltekörper in unterschiedlicher Weise mit dem Ventilteller verbindbar sein.

Eine besonders günstige Lösung sieht hierzu vor, dass der Haltekörper in den Nabenkörper einschraubbar ist.

Eine derartige Schraubverbindung zwischen dem Haltekörper und dem Nabenkörper lässt sich in besonders einfacher und zuverlässiger Weise realisieren.

Um die Verbindung zwischen dem Nabenkörper und dem Haltekörper gegen einen Lösen zu sichern ist vorzugsweise vorgesehen, dass eine Verbindung zwischen dem Haltekörper und dem Nabenkörper durch ein Blockierelement blockierbar ist.

Ein derartiges Blockierelement kann in unterschiedlichster Art und Weise ausgebildet sein.
Beispielsweise ist ein derartiges Blockierelement als Spannstift ausgebildet, welcher in einer Bohrung sitzt, die sich sowohl im Haltekörper als auch im Nabenkörper erstreckt.
Beispielsweise könnte diese Bohrung eine Querbohrung sein, die sich beispielsweise quer zu einer Spindelachse der Stellspindel erstreckt.
Eine besonders günstige Lösung sieht vor, dass die Bohrung eine sich sowohl im Haltekörper als auch im Nabenkörper erstreckende Bohrung ist, die sich vorzugsweise parallel zur Spindelachse der Stellspindel erstreckt.
Um eine zuverlässige Abdichtung zwischen dem Ventilteller und dem Dichtelement zu schaffen, ist vorgesehen, dass der Ventilteller auf seiner dem Dichtelement zugewandten Seite eine geschlossen umlaufend angeordnete Erhebung aufweist, gegen welche das Dichtelement anliegt.

Diese Erhebung ist so ausgebildet, dass sie bei Beaufschlagung des Dichtelements in Richtung des Ventiltellers sich in das Dichtelement eingräbt und somit eine linienähnliche mit starker Dichtpressung versehene Dichtlinie zwischen dem Dichtelement und dem Ventilteller bildet.
Um ferner ein optimales Verschließen des Absperrventils in der Schließstellung zu erreichen, ist vorgesehen, dass das Dichtelement eine konisch umlaufende Außenfläche aufweist, mit welcher dieses am Ventilsitz anlegbar ist.

Ein derartig ausgebildetes Dichtelement mit einer konisch zu Spindelachse der Stellspindel verlaufenden Außenfläche erlaubt es, in einfacher Weise eine gute Dichtwirkung im Bereich des Ventilsitzes zu erzielen. Erfindungsgemäß lässt sich die Dichtwirkung des Dichtelements im Zusammenwirken mit dem Ventilsitz dadurch verbessern, dass der Ventilsitz eine gerundete Übergangsfläche aufweist, an welcher die Außenfläche anlegbar ist. Erfindungsgemäß ist dabei der Ventilsitz so ausgebildet, dass er eine insbesondere konische Einlasswand und eine insbesondere konische oder zylindrische Auslasswand aufweist und dass die Übergangsfläche einen Übergang von der Einlasswand zu der Auslasswand bewirkt und somit die Möglichkeit eröffnet, eine ausreichend hohe Dichtpressung im Bereich des Ventilsitzes zwischen der Außenfläche und der Übergangsfläche zu erreichen.
Weitere Merkmale und Vorteile der Erfindung sind Gegenstand der nachfolgenden Beschreibung sowie der zeichnerischen Darstellung eines Ausführungsbeispiels.
In der Zeichnung zeigen:
- Fig. 1: eine Seitenansicht eines erfindungsgemäßen Absperrventils;
- Fig. 2: einen Längsschnitt durch das in Fig. 1 dargestellte Absperrventil,
- Fig. 3: eine vergrößerte Darstellung des Schnitts gemäß Fig. 2 im Bereich des Ventilelements und
- Fig. 4: eine vergrößerte Darstellung des Schnitts gemäß Fig. 3 in einem Bereich A in Fig. 3.

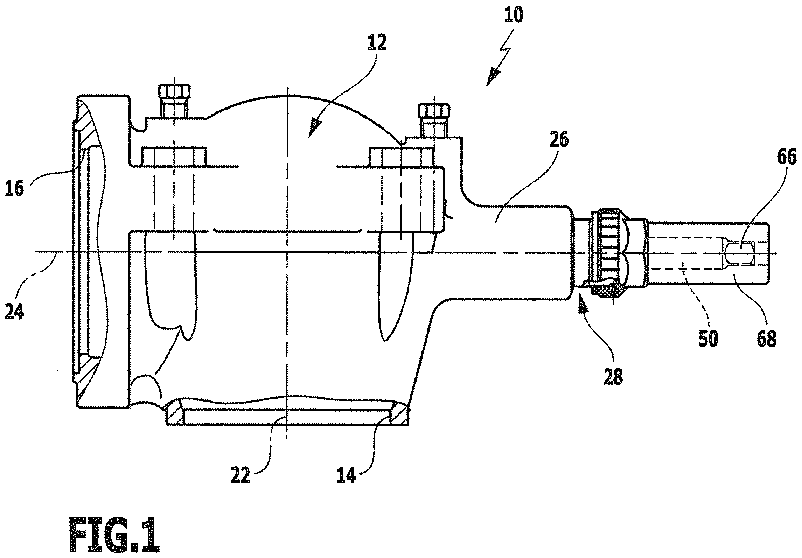

Ein in Fig. 1 dargestelltes Ausführungsbeispiel eines erfindungsgemäßen Absperrventils 10 umfasst ein Ventilgehäuse 12, welches einen Einlass 14 und einen Auslass 16 aufweist, wobei beispielsweise eine Mittelachse 22 des Einlasses 14 quer, vorzugsweise im rechten Winkel zu einer Mittelachse 24 des Auslasses 16 ausgerichtet ist.

Ferner umfasst das Ventilgehäuse auf einer dem Auslass 16 gegenüberliegenden Seite eine Aufnahme 26 für eine als Ganzes mit 28 bezeichnete Verstelleinheit, deren Funktion nachfolgend im Einzelnen erläutert wird.

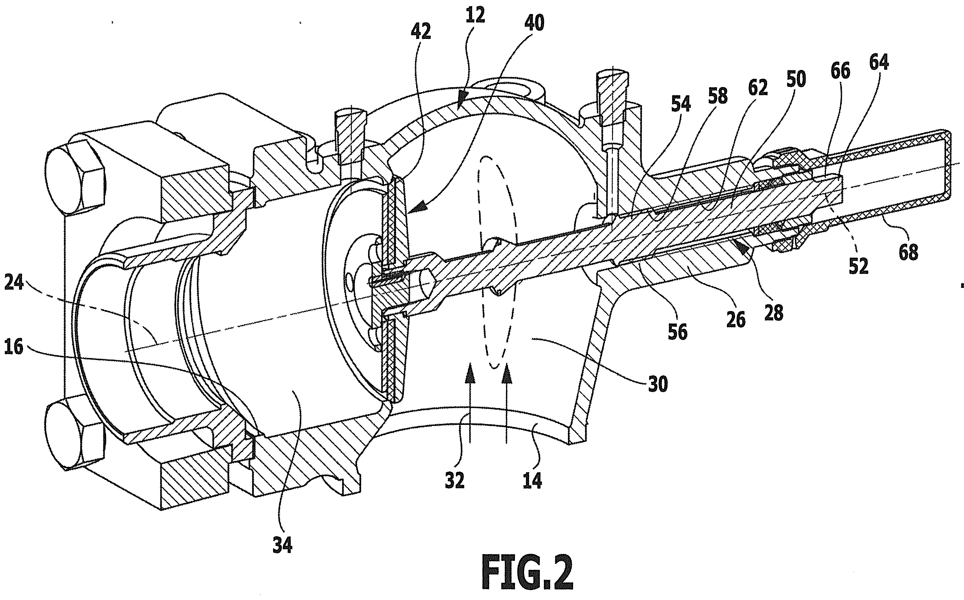

Wie in Fig. 2 dargestellt, ist in dem Ventilgehäuse 12 im Anschluss an den Einlass 14 ein Einlassraum 30 ausgebildet, welcher ein durch den Einlass 14 einströmendes Medium 32 aufnimmt und in Richtung eines Auslassraums 34 im Ventilgehäuse 12 umlenkt, an welchen sich der Auslass 16 anschließt.

Das Übertreten des einströmenden Mediums 32 in den Auslassraum 34 lässt sich jedoch durch ein als Ganzes mit 40 bezeichnetes Ventilelement verhindern, welches mittels der Verstelleinheit 28 relativ zu einem im Ventilgehäuse 12 am Übergang vom Einlassraum 30 zum Auslassraum 34 angeordneten Ventilsitz 42 bewegbar ist, und zwar von einer mit dem Ventilsitz 42 zusammenwirkenden, in Fig. 2 durchgezogen gezeichnete Verschließstellung in eine in Fig. 2 gestrichelt angedeutete Offenstellung und umgekehrt.

Dabei steht das Ventilelement 40 in der Offenstellung ungefähr mittig des Einlassraums 30, so dass die Mittelachse 22 das Ventilelement 40 in der Öffnungsstellung schneidet.

Ferner ist das Ventilelement 40 vorzugsweise parallel zur Mittelachse 24 des Auslasses 16 bewegbar, insbesondere koaxial zur Mittelachse 24.

Vorzugsweise ist auch der Ventilsitz 42 koaxial zur Mittelachse 24 des Auslasses 16 angeordnet.

Die Verstelleinheit 28, welche eine Bewegung des Ventilelements 40 parallel zur Mittelachse 24 des Auslasses 16 ermöglicht, umfasst vorzugsweise, wie in Fig. 2 dargestellt, eine um eine Spindelachse 52 drehbare Stellspindel 50, welche im Bereich eines Gewindeabschnitts 54 mit einem Außengewinde 56 versehen ist, das seinerseits in ein Innengewinde 58 eingreift, das in einer Gewindebohrung 62 der Aufnahme 26 vorgesehen ist, wobei die Gewindebohrung 62 in Richtung der Spindelachse 52 eine Länge aufweist, die so groß ist, dass der Gewindeabschnitt 54 sowohl in der Verschließstellung, als auch in der Offenstellung des Ventilelements 40 in der Gewindebohrung 62 gehalten und geführt ist.

Ferner ist die Stellspindel im Bereich ihres über die Aufnahme 26 überstehenden und somit aus dieser herausragenden Endes 64 mit einem Formschlusselement 66, beispielsweise einem Vierkant, versehen, welcher einen Antrieb der Stellspindel 52 mit einem geeigneten Antriebselement ermöglicht.

Vorzugsweise ist zur Abdeckung des Endes 64 der Stellspindel 50 noch eine Abdeckkappe 68 vorgesehen, die auf die Aufnahme 26 des Ventilgehäuses 12 aufschraubbar ist und dabei das Ende 64 der Stellspindel 54 in jeder Stellung des Ventilelements 40 aufzunehmen in der Lage ist.

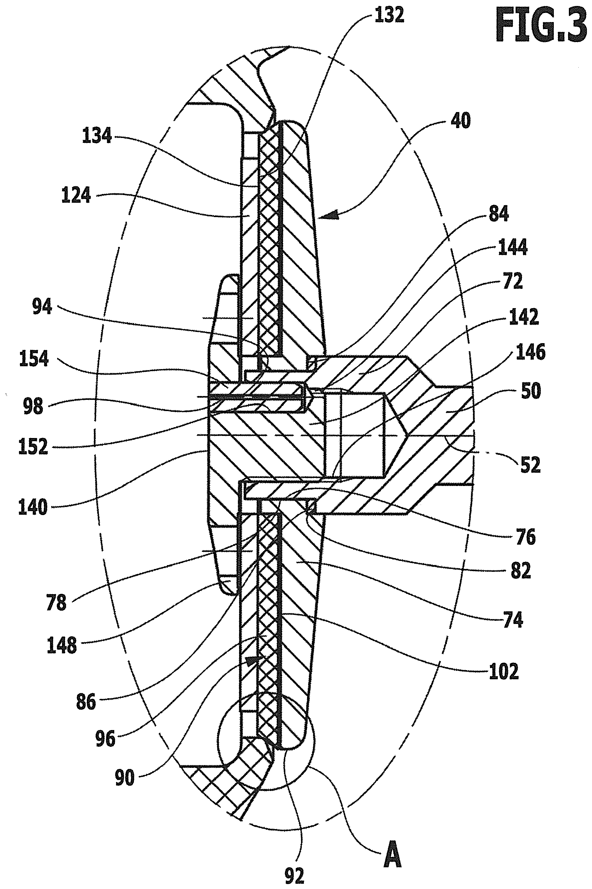

Wie in Fig. 3 dargestellt, ist das Ventilelement 40 an einem Nabenkörper 72, insbesondere an einer Nabenhülse der Stellspindel 50 gehalten, welche vorzugsweise einstückig an die Stellspindel 50 angeformt ist und ein in dem Einlassraum 30 liegendes Ende der Stellspindel 50 darstellt.

Dabei ist das Ventilelement 40 gebildet durch einen Ventilteller 74, welcher mit einem zentralen Durchbruch 76 versehen ist, der seinerseits auf einer zylindrischen Führungsfläche der Nabenhülse 72 sitzt und sich an einer radial über die zylindrische Führungsfläche 78 überstehenden Schulter 82 der Nabenhülse 72 abstützt, wobei zwischen der Schulter 82 und einer dieser zugewandten Stützfläche 84 des Ventiltellers eine Dichtung 86 vorgesehen ist, welche zu einem umlaufend dichten Abschluss zwischen der Nabenhülse 72 und dem Ventilteller 74 führt.

Der Ventilteller 74 trägt auf seiner dem Ventilsitz 42 zugewandten Seite ein Dichtelement 90, welches sich von einer bezüglich der Spindelachse 52 radial außenliegenden Außenumfangsseite 92 des Ventiltellers 74 bis zu einem Zentrieransatz 94 des Ventiltellers 74 erstreckt und beispielsweise als Scheibe ausgebildet ist, welche eine an dem Zentrieransatz 94 anliegende Zentrierausnehmung 98 aufweist.

Dabei stützt sich das als Scheibe 96 ausgebildete Dichtelement 90 über eine dem Ventilteller 74 zugewandte Stützseite 102 an dem Ventilteller 74 ab.

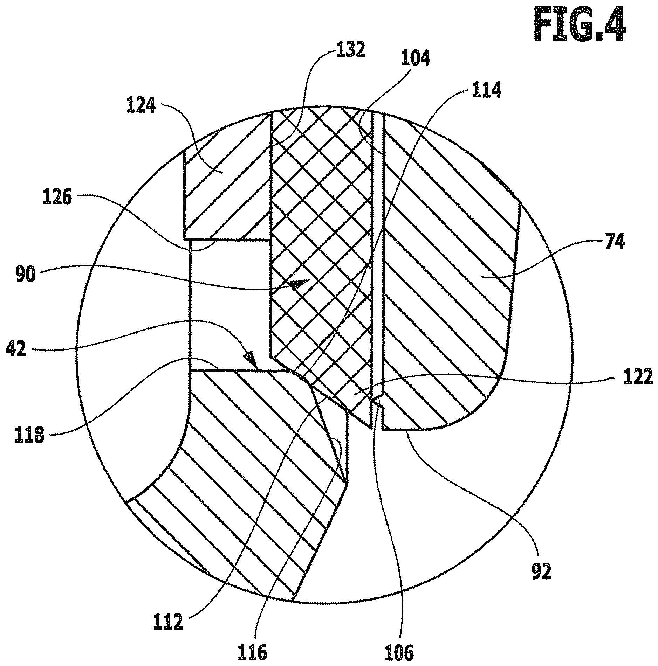

Hierbei ist vorzugsweise der Ventilteller 74, wie in Fig. 4 dargestellt, im Bereich nahe seiner Außenumfangsseite 92 mit einer ringförmig sich über eine Anlageseite 104 des Ventiltellers 74 vorstehenden ringförmige, insbesondere um die Spindelachse 52 geschlossen umlaufenden, Erhebung 106 versehen, gegen welche das Dichtelement 90 anlegbar ist und zwar so, dass sich die Erhebung 106 in das Material des Dichtelements 90 eingraben kann und zu einem dichten Abschluss zwischen dem Ventilteller 74 und dem Dichtelement 90 führt, so dass zwischen dem Ventilteller 74 und dem Dichtelement 90 kein Medium hindurchtreten und sich in Richtung des Zentrieransatzes 94 und der Zentrierausnehmung 98 ausbreiten kann.

Vielmehr wird durch die ringförmige Erhebung 106 aufgrund einer sich ausbildenden Dichtlinie ein dichter Abschluss zwischen dem Ventilteller 74 und dem Dichtelement 90 sichergestellt.

Zur Abdichtung im Bereich des Ventilsitzes 42 ist das Dichtelement 90 mit einer zur Spindelachse 52 konisch verlaufenden und radial außenliegenden Außenfläche 112 versehen, wobei der Konuswinkel der Außenfläche 112 im Bereich zwischen 45° und 80°, vorzugsweise im Bereich zwischen 50° und 70° liegt.

Diese konische Außenfläche 112 ist zum dichten Abschluss mit dem Ventilsitz 42 an einer im Querschnitt gerundeten Übergangsfläche 114 des Ventilsitzes 42 anlegbar, wobei die Übergangsfläche 114 zwischen einer konisch zur Spindelachse 52 verlaufenden und dem Einlassraum 30 zugewandten Einlasswand 116 und einer näherungsweise zylindrisch zur Spindelachse 52 verlaufenden Auslasswand 118 des Ventilsitzes 42 liegt. Dabei ist der Konuswinkel der Einlasswand 116 größer als der Konuswinkel der Außenfläche 112 des Dichtelements 90, so dass das Dichtelement 90 dicht beim Übergang in seine Schließstellung mit der Außenfläche 112 zunächst linienförmig an der Übergangsfläche 114 anliegt, wobei sich die Übergangsfläche 114 jedoch aufgrund ihres Radiuses zumindest teilweise in die Außenfläche 112 des Dichtelements 90 eingräbt, um einen dichten Abschluss zwischen der Übergangsfläche 114 und dem Dichtelement 90, insbesondere dessen Außenfläche 112 zu gewährleisten.

Vorzugsweise ist der Radius der um die Spindelachse 52 geschlossen ringförmig umlaufenden Erhebung 106 größer als ein Radius der Übergangsfläche 114, so dass dadurch im Bereich der Erhebung 106 eine optimale Verpressung zwischen dieser und dem Dichtelement 90 erfolgen kann, insbesondere zwischen einem über die Übergangsfläche 114 überstehenden Außenbereich 122 des Dichtelements 90 oder der Scheibe 96.

Dabei ist vorzugsweise der Konuswinkel der Einlasswand 116 größer, vorzugsweise signifikant größer als der Konuswinkel der Außenfläche 112 und liegt vorzugsweise im Bereich zwischen 80° und 90°.

Zur Fixierung der Scheibe 96 des Dichtelements 90 an dem Ventilteller 74 ist auf einer dem Ventilteller 74 gegenüberliegenden Seite des Dichtelements 90 ein Halteteller 124 vorgesehen, welcher die Scheibe 96 des Dichtelements 90 in radialer Richtung zur Spindelachse 52 im Wesentlichen abdeckt, jedoch in einem Abstand von der Außenfläche 112 des Dichtelements 90 verläuft, der gewährleistet, dass der Halteteller 124 mit einer radial zur Spindelachse 52 außenliegenden Außenseite 126 nicht mit dem Ventilsitz 42 kollidieren kann.

Vorzugsweise liegt die Außenseite 126 des Haltetellers 124 in einem radialen Abstand von der Spindelachse 52, welcher kleiner ist als der Radius der Auslasswand 118, vorzugsweise beträgt der Radius maximal 95% des Radiuses der Auslasswand 118.

Zweckmäßigerweise liegt dabei der Halteteller 124 mit einer Druckfläche 132 im Wesentlichen flächig an einer der Druckfläche 132 zugewandten Anlagefläche 134 des Dichtelements 90, insbesondere der Scheibe 96, an und beaufschlagt das Dichtelement 90, insbesondere die Scheibe 96, in Richtung der Anlageseite 104 des Ventiltellers 74.

Zur Fixierung des Haltetellers 124 relativ zum Ventilteller 74 und zum Einspannen des Dichtelements 90 zwischen dem Halteteller 124 und dem Ventilteller 74 ist ein Haltekörper 140 vorgesehen, welcher mit einem Gewindeansatz 142, der mit einem Außengewinde 144 versehen ist, in ein Innengewinde 146 der Nabenhülse 72 eingeschraubt ist.

Ferner umfasst der Haltekörper 140 einen mit dem Gewindeansatz 142 verbundenen Flanschkörper 148, welcher in einem radial außenliegenden und um den Gewindeansatz 142 herum verlaufenden Bereich den Halteteller 124 beaufschlagt, um mit diesem wiederum das Dichtelement 90 in Richtung des Ventiltellers 74 zu beaufschlagen.

Ferner ist der Haltekörper in seiner das Dichtelement 90 zwischen dem Halteteller 124 und dem Ventilteller 74 einspannen den kraftschlüssig fixierenden Stellung relativ zur Nabenhülse 72 fixierbar und zwar durch eine in das Außengewinde 144 und das Innengewinde 146 eingreifende und insbesondere parallel zur Spindelachse 52 verlaufende Bohrung 152, in welche ein Spannstift 154 einsetzbar ist, welcher dann, wenn dieser in der Bohrung 152 sitzt, eine Verdrehung des Außengewindes 144 relativ zum Innengewinde 146 und somit ein Verdrehung des Gewindeansatzes 172 relativ zur Nabenhülse 72 verhindert.

Das erfindungsgemäße Absperrventil arbeitet nun so, dass sich durch die Verstelleinheit 28 das gesamte Ventilelement 40 relativ zum Ventilsitz 42 bewegen lässt, wobei in seiner Verschließstellung das Dichtelement 90 mit seiner konischen Außenfläche 112 an der Übergangsfläche 114 anliegt und dabei so stark an die Übergangsfläche 114 angepresst ist, dass diese die Außenfläche 112 deformiert, so dass sich diese an die Übergangsfläche 114 anlegt.

Dies erfolgt durch Drehen der Stellspindel 50, wobei sich mit der Stellspindel 50 der Ventilteller 74 und das Dichtelement 90 sowie der Halteteller 124 mitdrehen, so dass die Außenfläche 112 des Dichtelements 90 im Zuge einer Drehbewegung an der Übergangsfläche 114 zur Anlage kommt.

Soll das Ventilelement 40 von der vorstehend beschriebenen Verschließstellung in die Offenstellung bewegt werden, so erfolgt ebenfalls ein Drehen der Stellspindel 50, allerdings mit entgegengesetzter Drehrichtung, so dass sich das Dichtelement 90 mit der Außenfläche 112 im Zuge einer Drehbewegung von der Übergangsfläche 114 löst.

Dabei kann bei langandauernder Schließstellung des Ventilelements 40 das Dichtelement 90 mit der Außenfläche 112 an der Übergangsfläche 114 haften bleiben, so dass beim Übergang des Ventilelements 40 von der Schließstellung in die Offenstellung eine Drehbewegung des Dichtelements 90 gehemmt ist.

In diesem Fall kann das Dichtelement 90 trotz des Kraftschlusses zum Ventilteller 74 und zum Halteteller 124 kurzzeitig nicht mit dem Ventilteller 74 mitdrehen, so dass einerseits ein Drehen der Stellspindel 50 zum Abheben des Ventilelements 40 von dem Ventilsitz 42 möglich ist, andererseits das Dichtelement 90 kurzzeitig drehfest relativ zum Ventilsitz 42, insbesondere zur Übergangsfläche 114, stehen bleiben kann, bis sich der Ventilteller 74 mitsamt den Halteteller 124 etwas vom Ventilsitz 42 entfernt hat, so dass sich auch in diesem Fall ein Haften der Außenfläche 112 an der Übergangsfläche 114 durch die Bewegung in Richtung der Spindelachse 52 vom Ventilsitz 42 weg lösen kann und dann der Ventilteller 74 wieder mit der Stellspindel 50 mitdrehen kann.

## Patentansprüche

1. Absperrventil (10) umfassend ein Ventilgehäuse (12), einen am Ventilgehäuse gehaltenen Ventilsitz (42) und ein in dem Ventilgehäuse (12) relativ zum Ventilsitz (42) bewegbares Ventilelement (40), welches mittels einer Verstelleinheit (28) bewegbar ist und welches einen Ventilteller (74) aufweist, welcher seinerseits auf seiner dem Ventilsitz (42) zugewandten Seite mit einem Dichtelement (90) versehen ist, das an dem Ventilteller (74) anliegt, wobei der Ventilteller (74) auf seiner dem Dichtelement (90) zugewandten Seite eine geschlossen umlaufend angeordnete Erhebung (106) aufweist, gegen welche das Dichtelement (90) anliegt, und wobei die Erhebung (106) so ausgebildet ist, dass bei Beaufschlagung des Dichtelements (90) in Richtung des Ventiltellers (74) sich die Erhebung (106) in das Dichtelement (90) eingräbt,
**dadurch gekennzeichnet, dass** das Dichtelement (90) eine konisch verlaufende Außenfläche (112) aufweist, mit welcher dieses an dem Ventilsitz (42) anlegbar ist, dass der Ventilsitz (42) eine Einlasswand (116) und eine Auslasswand (118) aufweist, dass eine Übergangsfläche (114) einen Übergang von der Einlasswand (116) zu der Auslasswand (118) bewirkt, und dass die Übergangsfläche (114), an welcher die Außenfläche (112) anlegbar ist, gerundet ist.

2. Absperrventil nach Anspruch 1, **dadurch gekennzeichnet, dass** das Ventilelement (40) drehfest mit der Verstelleinheit (28) verbunden ist.

3. Absperrventil nach einem der voranstehenden Ansprüche, **dadurch gekennzeichnet, dass** das Ventilelement (40) einen Nabenkörper (72) aufweist, welcher mit der Verstelleinheit (28) verbunden ist.

4. Absperrventil nach Anspruch 3, **dadurch gekennzeichnet, dass** die Nabenkörper (72) einen den Ventilteller (74) tragenden Zentralabschnitt des Ventilelements (40) bildet.

5. Absperrventil nach einem der voranstehenden Ansprüche, **dadurch gekennzeichnet, dass** die Verstelleinheit (28) eine Stellspindel (50) umfasst, die drehbar und axial verstellbar in einer Aufnahme (26) des Ventilgehäuses (12) angeordnet ist.

6. Absperrventil nach Anspruch 5, **dadurch gekennzeichnet, dass** das Ventilelement (40) drehfest mit der Stellspindel (50) verbunden ist.

7. Absperrventil nach Ansprüche 4 und 5, **dadurch gekennzeichnet, dass** der Nabenkörper (72) mit der Stellspindel (50) verbunden ist.

8. Absperrventil nach einem der voranstehenden Ansprüche, **dadurch gekennzeichnet, dass** das Ventilelement (40) auf seiner dem Ventilteller (74) gegenüberliegenden Seite des Dichtelements (90) einen Halteteller (124) trägt, der das Dichtelement (90) in Richtung des Ventiltellers (74) beaufschlagt.

9. Absperrventil nach Anspruch 8, **dadurch gekennzeichnet, dass** der Halteteller (124) durch einen Haltekörper (140) in Richtung des Ventiltellers (74) beaufschlagt ist.

10. Absperrventil nach Ansprüche 3 und 9, **dadurch gekennzeichnet, dass** der Haltekörper (140) in den Nabenkörper (72) einschraubbar ist.

11. Absperrventil nach Anspruch 10, **dadurch gekennzeichnet, dass** eine Verbindung zwischen dem Haltekörper (140) und dem Nabenkörper (72) durch ein Blockierelement (154) blockierbar ist.

12. Absperrventil nach einem der voranstehenden Ansprüche, **dadurch gekennzeichnet, dass** der Radius der um die Spindelachse (52) geschlossen ringförmig umlaufenden Erhebung (106) größer als ein Radius der Übergangsfläche (114) ist.

## Claims

1. A shut-off valve (10) including a valve housing (12), a valve seat (42) which is held on the valve housing, and a valve element (40) which is movable in the valve housing (12) relative to the valve seat (42), is movable by means of an adjusting unit (28) and comprises a valve disc (74) which is provided, for its part, on its side facing the valve seat (42), with a sealing element (90) that abuts against the valve disc (74), the valve disc (74) having on its side facing the sealing element (90) an elevated region (106) that is arranged to run peripherally and in closed manner and against which the sealing element (90) abuts, and the elevated region (106) being formed such that, when the sealing element (90) is urged in the direction of the valve disc (74), the elevated region (106) digs into the sealing element (90)
**characterised in that** the sealing element (90) has a conical outer surface (112) by means of which the sealing element is abuttable against the valve seat (42), **in that** the valve seat (42) has an intake wall (116) and an outtake wall (118), **in that** a transitional surface (114) creates a transition from the intake wall (116) to the outtake wall (118), and **in that** the transitional surface (114) against which the outer surface (112) is abuttable, is rounded.

2. A shut-off valve according to Claim 1, **characterised in that** the valve element (40) is connected to the adjusting unit (28) such that it cannot rotate in relation thereto.

3. A shut-off valve according to one of the preceding claims, **characterised in that** the valve element (40) has a hub body (72) which is connected to the adjusting unit (28).

4. A shut-off valve according to Claim 3, **characterised in that** the hub body (72) forms a central portion of the valve element (40) which carries the valve disc (74).

5. A shut-off valve according to one of the preceding claims, **characterised in that** the adjusting unit (28) includes an actuating spindle (50) which is arranged to be rotatable and axially adjustable in a receptacle (26) of the valve housing (12).

6. A shut-off valve according to Claim 5, **characterised in that** the valve element (40) is connected to the actuating spindle (50) such that it cannot rotate in relation thereto.

7. A shut-off valve according to Claim 4 and 5, **characterised in that** the hub body (72) is connected to the actuating spindle (50).

8. A shut-off valve according to one of the preceding claims, **characterised in that** the valve element (40) carries, on its opposite side of the sealing element (90) to the valve disc (74), a holding disc (124) which urges the sealing element (90) in the direction of the valve disc (74).

9. A shut-off valve according to Claim 8, **characterised in that** the holding disc (124) is urged in the direction of the valve disc (74) by a holding body (140).

10. A shut-off valve according to Claims 3 and 9, **characterised in that** the holding body (140) is screwable into the hub body (72).

11. A shut-off valve according to Claim 10, **characterised in that** a connection between the holding body (140) and the hub body (72) is lockable by a locking element (154).

12. A shut-off valve according to one of the preceding claims, **characterised in that** the radius of the elevated region (106) which runs as a ring peripherally and in closed manner around the spindle axis (52) is greater than a radius of the transitional surface (114).

## Revendications

1. Soupape d'arrêt (10) comprenant un carter de soupape (12), un siège de soupape (42) maintenu sur le carter de soupape et un élément de soupape (40) mobile par rapport au siège de soupape (42) dans le carter de soupape (12), lequel élément de soupape (40) peut être déplacé au moyen d'une unité de déplacement (28) et présente une tête de soupape (74) munie, sur son côté tourné vers le siège de soupape (42), d'un élément d'étanchéité (90) qui prend appui sur la tête de soupape (74), la tête de soupape (74) présentant, sur son côté dirigé vers l'élément d'étanchéité (90), une aspérité (106) disposée de manière circonférentielle fermée contre laquelle l'élément d'étanchéité prend appui, et l'aspérité (106) étant conçue pour s'enfoncer dans l'élément d'étanchéité (90) lors de la sollicitation de l'élément d'étanchéité (90) en direction de la tête de soupape (74), **caractérisée en ce que** l'élément d'étanchéité (90) présente une face extérieure conique (112) avec laquelle celui-ci peut être plaqué contre le siège de soupape (42), **en ce que** le siège de soupape (42) présente une paroi d'admission (116) et une paroi d'évacuation (118), **en ce qu'**une face de transition (114) crée une transition entre la paroi d'admission (116) et la paroi d'évacuation (118), et **en ce que** la face de transition (114), contre laquelle la face extérieure (112) peut être plaquée, est arrondie.

2. Soupape d'arrêt selon la revendication 1, **caractérisée en ce que** l'élément de soupape (40) est relié à l'unité de déplacement (28) de manière fixe en rotation.

3. Soupape d'arrêt selon l'une quelconque des revendications précédentes, **caractérisée en ce que** l'élément de soupape (40) présente un corps de moyeu (72) relié à l'unité de déplacement (28).

4. Soupape d'arrêt selon la revendication 3, **caractérisée en ce que** le corps de moyeu (72) forme un tronçon central, portant la tête de soupape (74), de l'élément de soupape (40).

5. Soupape d'arrêt selon l'une quelconque des revendications précédentes, **caractérisée en ce que** l'unité de déplacement (28) comporte une broche de réglage (50) pouvant tourner et disposée de manière axialement mobile dans un logement (26) du carter de soupape (12).

6. Soupape d'arrêt selon la revendication 5, **caractérisée en ce que** l'élément de soupape (40) est relié à la broche de réglage (50) de manière fixe en rotation.

7. Soupape d'arrêt selon les revendications 4 et 5, **caractérisée en ce que** le corps de moyeu (72) est relié à la broche de réglage (50).

8. Soupape d'arrêt selon l'une quelconque des revendications précédentes, **caractérisée en ce que** l'élément de soupape (40) porte, sur son côté opposé à la tête de soupape (74) de l'élément d'étanchéité (90), une plaque de retenue (124) qui sollicite l'élément d'étanchéité (90) en direction de la tête de soupape (74).

9. Soupape d'arrêt selon la revendication 8, **caractérisée en ce que** la plaque de retenue (124) est sollicitée par un corps de retenue (140) en direction de la tête de soupape (74).

10. Soupape d'arrêt selon les revendications 3 et 9, **caractérisée en ce que** le corps de retenue (140) peut être vissé dans le corps de moyeu (72).

11. Soupape d'arrêt selon la revendication 10, **caractérisée en ce qu'**une liaison entre le corps de retenue (140) et le corps de moyeu (72) peut être bloquée par un élément de blocage (154).

12. Soupape d'arrêt selon l'une quelconque des revendications précédentes, **caractérisée en ce que** le rayon de l'aspérité (106) fermée entourant l'axe de broche (52) en forme d'anneau est supérieur au rayon de la face de transition (114).
